# EUROPEAN PATENT APPLICATION

(11) **EP 3 056 696 A1**
(43) Date of publication of application: **17.08.2016**
(21) Application number: 15305192.5
(22) Date of filing: 10.02.2015
(51) Int. Cl.: F01L 1/14, F01L 1/18, F02M 59/10

(54) **MECHANICAL SYSTEM FORMING A CAM FOLLOWER OR A ROCKER ARM, INJECTION PUMP OR VALVE ACTUATOR COMPRISING SUCH A MECHANICAL SYSTEM AND METHOD FOR MANUFACTURING SUCH A MECHANICAL SYSTEM**

(71) Applicant: Aktiebolaget SKF, 415 50 Göteborg (SE)
(72) Inventor: Champalou, François, 41150 Chaumont sur Loire (FR)
(74) Representative: Lavoix

(57) **Abstract**

This mechanical system (1) forms a cam follower or a rocker arm, and comprises a support element (10), a pin (30) extending between two opposite ends (35, 36) along a first axis (X1) and supported by the support element (10), and a roller (40) mounted on the pin (30), movable in rotation relative to the pin (30) around the first axis (X1) and adapted to roll on a cam (2) The support element (10) comprises a hollow cylindrical wall (1) delimiting a cavity (C) in which the pin (30) and the roller (40) are housed. The wall (11) has two edges (15, 16) perpendicular to the first axis (X1), and joined together.

## Description

### TECHNICAL FIELD OF THE INVENTION

The invention concerns a mechanical system, forming a cam follower or a rocker arm, and comprising a pin or a roller. The invention also concerns an injection pump or a valve actuator comprising such a mechanical system. Finally, the invention concerns a method for manufacturing such a mechanical system.

### BACKGROUND OF THE INVENTION

Classically, a cam follower comprises at least a tappet, a pin and a roller. The tappet extends along a longitudinal axis, while the pin and the roller are centered on a transversal axis. The tappet delimits an intermediate gap and comprises two coaxial cylindrical bores. The roller is positioned in the intermediate gap, between both bores. The pin is fitted in the two bores, such that the roller is movable in rotation relative to the pin around its axis.

When the cam follower is in service, the roller collaborates with a cam synchronized with the internal combustion engine camshaft. The rotation of the camshaft leads to a periodic displacement of a piston of the pump that rests against the tappet, to allow fuel to be delivered. The tappet is movable back and forth along the longitudinal axis in a bore belonging to the injection pump, with the cylindrical outer surface of the tappet sliding in this bore. The roller is movable in rotation around its central axis.

As shown by example in EP-A-2 607 636, it is known to provide the tappet with a single piece body equipped with two flanges having holes for supporting the ends of the pin on which the roller is mounted. For assembling the cam follower, the roller is mounted between the flanges of the tappet. Then, the pin is inserted in the roller, through the holes of the flanges, the ends of the pin being supported by the flanges. The tappet is made by stamping. The tool used for the stamping is expensive and it is not able to make all the shapes of the tappet. Then, in order to create the specific geometry of the body, the tappet has to be machined, which is long and expensive.

### SUMMARY OF THE INVENTION

The aim of the invention is to provide an improved mechanical system having a reduced cost.

To this end, the invention concerns a mechanical system forming a cam follower or a rocker arm, the mechanical system comprising:
- a support element,
- a pin extending between two opposite ends along a first axis and supported by the support element, and
- a roller mounted on the pin, movable in rotation relative to the pin around the first axis and adapted to roll on a cam,
wherein the support element comprises a hollow cylindrical wall delimiting a cavity in which the pin and the roller are housed, the wall having two edges perpendicular to the first axis, and joined together.

Thanks to the invention, the shape of the tappet is simple and can be easily obtained by cutting and rolling a flat metal sheet.

According to further aspects of the invention which are advantageous but not compulsory, such a mechanical system may incorporate one or several of the following features:
- The thickness of the cylindrical wall is substantially constant.
- Each edge is equipped with assembling means for joining the edges together.
- The assembling means are integral with the cylindrical wall.
- The assembling means comprise tabs projecting from a first edge and recesses located on the second edge, having a hollow shape complementary to the shape of the tabs.
- The edges are welded together.
- The cylindrical wall includes two bores supporting the pin.
- The mechanical system includes an insert located inside the support element and configured for receiving a shaft or a plunger for moving the mechanical system.
- The insert is a disc having radial protrusions housed inside cut-outs made in the cylindrical wall.
- The insert has two holding portions supporting the pin.
- The insert is assembled to the support element by means of punched deformations protruding inside the support element.

Another object of the invention concerns an injection pump for a motor vehicle, comprising such a mechanical system.

Another object of the invention concerns a valve actuator for a motor vehicle, comprising such a mechanical system.

Another aspect of the invention concerns a method for manufacturing such a mechanical system, wherein:
- a) a flat metal sheet is cut to make the contours of the support element,
- b) the sheet is rolled to obtain the cylindrical shape of the cylindrical wall,
- c) the edges are joined together,
- d) the roller is mounted on the support element.

Preferably, the edges are joined by clamping or by welding.

### BRIEF DESCRIPTION OF THE DRAWINGS

The invention will now be explained in correspondence with the annexed figures, as two illustrative examples, without restricting the object of the invention. In the annexed figures:
- Figure 1 is an exploded perspective view of a mechanical system according to a first embodiment of the invention, of the cam follower type;
- Figure 2 is a partial sectional view of the mechanical system of figure 1 along plane II of figure 1;
- Figure 3 is a perspective view of a tappet of the mechanical system of figure 1, during a manufacturing step;
- Figure 4 is a perspective view of a metal sheet used to make the tappet of figure 3;
- Figure 5 is a perspective view of a mechanical system according to a second embodiment of the invention, of the cam follower type; and
- Figures 6 is a sectional view of the mechanical system along plane VI of figure 5.

### DETAILED DESCRIPTION OF SOME EMBODIMENTS

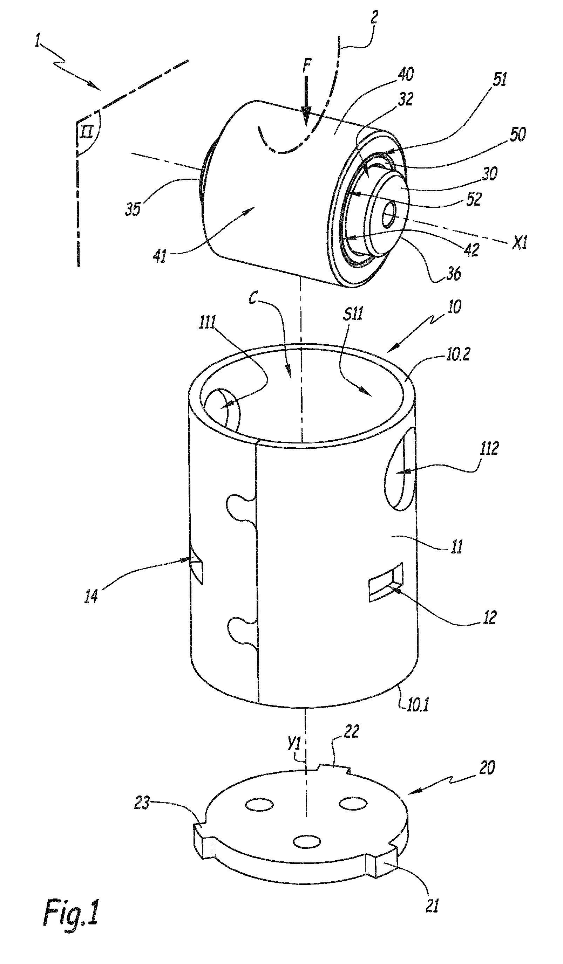

The mechanical system 1 represented on figures 1 to 4 is of the cam follower type, adapted to equip an injection pump for a motor vehicle, not shown.

Mechanical system 1 comprises a support element or tappet 10, an insert 20, a pin 30 and a roller 40, together forming a plain bearing. Pin 30 and roller 40 are shown on figure 1 only.

In heavy duty applications such as in diesel truck engines, there is a lack of space for the implementation of a rolling bearing, thus justifying the use of a plain bearing between parts 30 and 40 Pin 30 and roller 40 are centered on a transversal axis X1, while tappet 10 is centered on a longitudinal axis Y1 of mechanical system 1. Axes X1 and Y1 are perpendicular. Roller 40 is adapted to roll on a cam 2, partly shown on figure 1 only, in centerline. More precisely, an external surface 41 of roller 40 can roll on the outer surface of cam 2. When cam 2 and roller 40 are cooperating, a force F is applied on surface 41 along longitudinal axis Y1.

A cavity C is delimited inside tappet 10. This cavity C is adapted to receive a shaft or plunger not shown, against insert 20, for moving tappet 10 along axis Y1. Tappet 10 is movable back and forth along axis YI, in a non-represented bore belonging to the injection pump.

Tappet 10 has a cylindrical wall or skirt 11 centered along longitudinal axis YI, with a first end or lower end 10.1, on the side of plunger, and a second end or upper end 10.2 on the side of pin 30 and roller 40. An internal surface S11 of cylindrical wall 11 delimits cavity C. Tappet 10 is made from a metallic material. The thickness of cylindrical wall 11 is substantially constant.

Roller 40 has an outer cylindrical surface 41 and an internal cylindrical bore 42, both centered on transversal axis X1. Pin 30 comprises a cylindrical outer surface 32 extending between pin ends 35 and 36. Roller 40 is movable in rotation relative to pin 30 around axis X1. Both pin 30 and roller 40 axes merge with transversal axis X1.

Optionally, a bushing 50 is located at the interface between pin 30 and roller 40. Bushing 50 has an outer cylindrical surface 51 and an inner cylindrical bore 52 During assembly of system 1, surface 51 of bushing 50 is adjusted with bore 42 of roller 40, while surface 32 of pin 30 is adjusted with bore 52 of bushing 50, such that roller 40 is movable in rotation relative to pin 30 around axis X1. Pin 30, roller 40 and bushing 50 axes merge with axis X1.

Two bores 111 and 112 are arranged on the cylindrical wall 11 to receive ends 35 and 36 of pin 30. Bores 111 and 112 are diametrically opposed with respect to longitudinal axis Y1. The diameter of bores 111 and 112 are identical.

Insert 20 is made from a metallic sheet, or by sintering. Insert 20 is shaped like a disc equipped with external and radial protrusions, for example three protrusions 21, 22 and 23. In a variant, the number of protrusions is higher than three, for example four, five or six protrusions.

Each protrusion 21, 22 and 23 of insert 20 is housed into a rectangular cut-out 12, 13 and 14 of cylindrical wall 11. Protrusions 21 to 23 and cut-outs 12 to 14 form assembling means for assembling insert 20 with tappet.

During operation, the load F applied by cam 2 on roller 40 is transferred to insert 20 and plunger via pin 30.

Hereunder is described a method for manufacturing mechanical system 1.

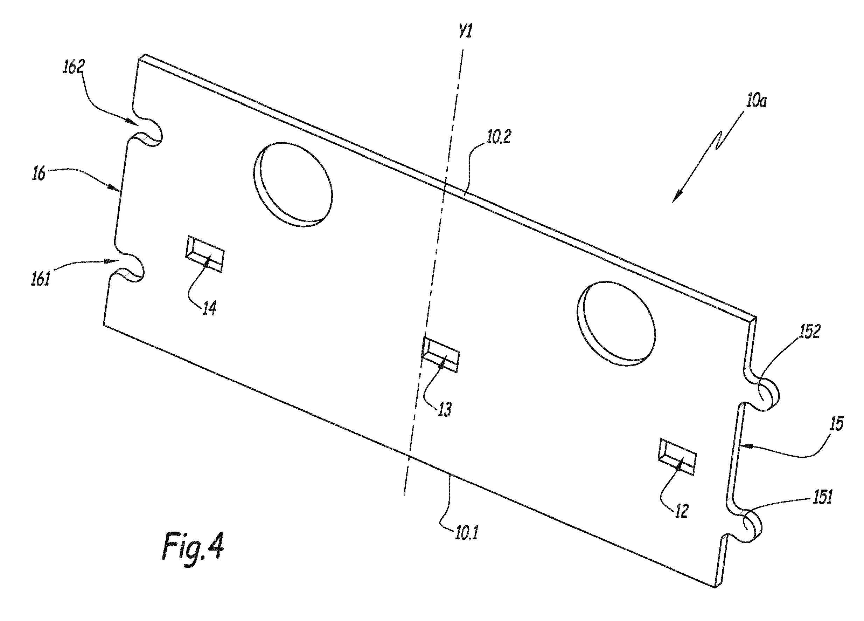

A flat metal sheet 10a, shown on figure 4, is used to make tappet 10. The geometry of the edges of metal sheet 10a is obtained by cutting.

Sheet 10a is generally rectangular and has two longitudinal edges 15 and 16, parallel to longitudinal axis Y1, and two transversal edges 10.1 and 10.2, perpendicular to longitudinal edges 15 and 16.

First edge 15 has first assembling means 151 and 152, designed to cooperate respectively with second assembling means 161 and 162 equipping the second edge 16, for joining edges 15 and 16. Assembling means 151, 152, 161 and 162 are integral with sheet 10a. First assembling means 151 and 152 are tabs projecting from first edge 15, shaped like an excrescence of the piece of a puzzle. Second assembling means 161 and 162 are recesses having a hollow shape complementary to the shape of tabs 151 and 152.

Cut-offs 12 to 14 and bores 111 and 112 are cut in the metal sheet 10a.

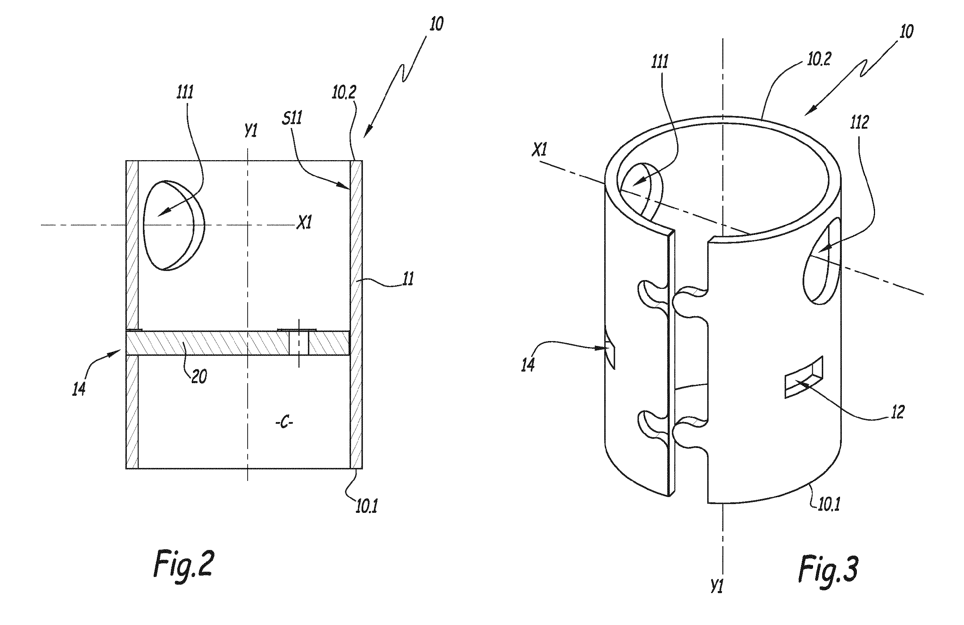

As shown on figure 3, sheet 10a is rolled to obtain a cylindrical shape, centered on longitudinal axis Y1. At this stage, edges 15 and 16 of tappet 10 are distant from each other, so assembling means 151, 152, 161 and 162 remain separate, allowing insert 20 to be mounted inside sheet 10a with protrusions 21, 22 and 23 partially housed inside cut-outs 12, 13 and 14. Preferably, at least one protrusion 21, 22 or 23 is housed inside the corresponding cut-out 12, 13 or 14.

Then, assembling means 151, 152, 161 and 162 are clamped in order to join edges 15 and 16. Tabs 151 and 152 are inserted into recesses 161 and 162. Simultaneously, protrusions 21, 22 and 23 move inside the corresponding cut-out 12, 13 and 14, thanks to the deformation of the sheet 10a.

Roller 40 is inserted inside tappet 10, between bores 111 and 112. Then, pin 30 is inserted through bores 111 and 112 of tappet 10 and through bore 42 of roller 40.

A caulking operation is performed for retaining pin 30 inside tappet 10. The plastic deformation of ends 35 and 36 of pin 30 block the translation of pin 30 and roller 40 along transverse axis X1, with respect to tappet 10.

Mechanical system 1 is simple and fast to produce, and has a reduced cost thanks to the rolling of sheet 10a. No stamping operation is required.

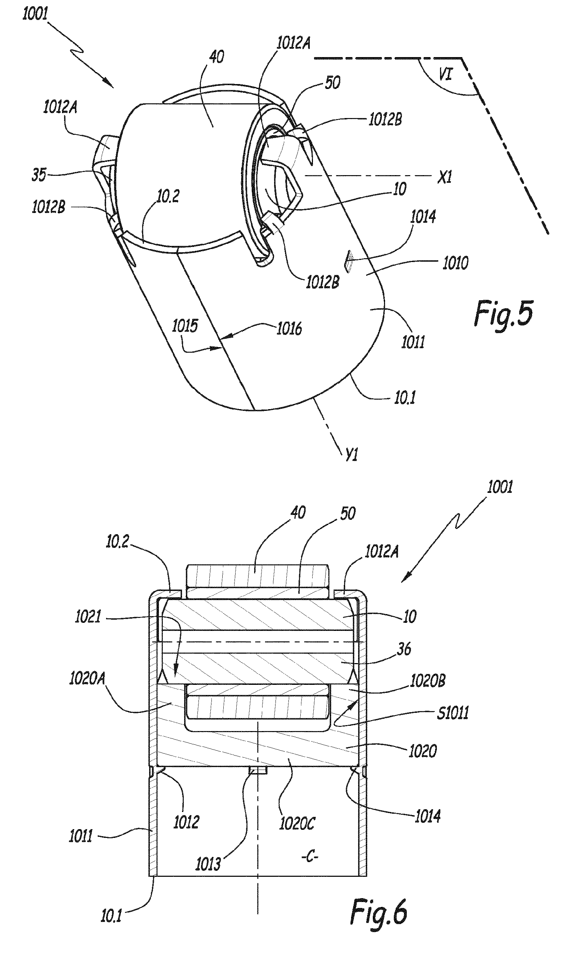

Figures 5 and 6 show a second embodiment of a mechanical system 1001 according to the invention. Hereinafter, the parts of mechanical system 1001 similar to corresponding parts of mechanical system 1 of figures 1 to 4 bear the same references and are not described. The description focuses on differences between mechanical systems 1 and 1001.

Mechanical system 1 includes a tappet 1010, an insert 1020, a pin 30, a roller 40 and a bushing 50.

Tappet 1010 includes a hollow cylindrical wall or skirt 1011 centered on longitudinal axis Y1 and delimiting an internal cavity C.

Insert 1020 includes a first holding portion 1020A and a second holding portion 1020B generally parallel with longitudinal axis Y1, and a connecting portion 1020C perpendicular to holding portions 1020A and 1020B.

Each holding portion 1020A and 1020B is designed to receive one end 35 or 36 of pin 30, for example by means of a semi-circular recess 1021 centered on transversal axis X1 and having a diameter roughly equal to the diameter of pin 30. Holding portions 1020A and 1020B have a convex external and radial surface curved like a portion of cylinder, centered on longitudinal axis Y1, having a diameter roughly equal to the diameter of the internal surface S1011 of tappet 1010.

Insert 1020, pin 30, roller 40 and bushing 50 form a pin assembly movable in translation inside cavity C of tappet 1010.

In a first direction from lower end 10.1 of tappet 1010 towards upper end 10.2, the translation of pin assembly along longitudinal axis Y1 is blocked by tabs 1012A protruding from upper end 10.2 of tappet 10. Tabs 1012A are external with respect to cavity C. Each pin end 35 and 36 is blocked by a tab 1012A.

In a second direction opposite the first direction, from upper end 10.2 of tappet 10 towards lower end 10.1, the translation of pin assembly along longitudinal axis Y1 is stopped by a second axial abutment formed by deformations 1012, 1013 and 1014 protruding inside cavity C. Deformations 1012 to 1014 are made by punching.

Upper end 10.2 of tappet 3010 has additional tabs 1012B located on one side and another of each tab 1012A. Additional tabs 1012B prevent pin assembly 1020, 30, 40, 50 from rotating around longitudinal axis Y1 with respect to tappet 1010.

The manufacturing method for manufacturing system 1 is globally similar to the method described in reference to figures 1 to 4.

A flat metal sheet is used to make tappet 1010. The geometry of the edges of this metal sheet is obtained by cutting or stamping.

This metal sheet is generally rectangular and has two longitudinal flat edges 1015 and 1016, parallel to longitudinal axis Y1, and two transversal edges 10.1 and 10.2, perpendicular to longitudinal edges 1015 and 1016.

Similarly to what is shown on figure 3 for the first embodiment, the metal sheet is rolled to obtain a cylindrical shape, centered on longitudinal axis YI. At this stage, edges 1015 and 1016 of tappet 1010 are distant from each other, so edges 1015 and 1016 remain separate.

Edges 1015 and 1016 are then welded together. In the example of figure 5 and 6, edges 1015 and 1016 are rectilinear In a variant, they are curved.

Insert 1020 and sub-assembly 30, 40 and 50 are mounted on tappet 1010.

A punching operation is performed to make deformations 1012 to 1014.

In a non-depicted variant, bushing 50 is eliminated or replaced by another type of sliding element, such as needle roller bearings with plastic cage, used for injection pumps for gasoline engines.

Other non-show embodiments can be implemented within the scope of the invention. For example, support element 10 or 1010 may have a different configuration depending on the intended application of system 1.

Moreover, the mechanical system 1 according to the invention is not limited to a cam follower. For example, system 1 may form a rocker arm, wherein the support element 10 is an arm movable in rotation along a pivot axis parallel to axis X1.

According to another non-shown embodiment, system 1 may comprise a rolling or sliding bearing, with bearing elements positioned at the interface between pin 30 and roller 40.

The invention also concerns an injection pump or a valve actuator comprising such a mechanical system 1 or 1001.

In addition, technical features of the different embodiments can be, in whole or part, combined with each other. Thus, mechanical systems can be adapted to the specific requirements of the application.

## Claims

1. A mechanical system (1; 1001) forming a cam follower or a rocker arm, the mechanical system comprising:
- a support element (10; 1010),
- a pin (30) extending between two opposite ends (35, 36) along a first axis (X1) and supported by the support element (10; 1010), and
- a roller (40) mounted on the pin (30), movable in rotation relative to the pin (30) around the first axis (X1) and adapted to roll on a cam (2),
wherein the support element (10, 1010) comprises a hollow cylindrical wall (11; 1011) delimiting a cavity (C) in which the pin (30) and the roller (40) are housed, the wall (11; 1011) having two edges (15, 16; 1015, 1016) perpendicular to the first axis (X1), and joined together.

2. The mechanical system according to claim 1, **characterized in that** the thickness of the cylindrical wall (11; 1011) is substantially constant.

3. The mechanical system according to any of the preceding claims, **characterized in that** each edge (15, 16) is equipped with assembling means (151, 152, 161, 162) for joining the edges together.

4. The mechanical system according to claim 3, **characterized in that** the assembling means (151, 152, 161, 162) are integral with the cylindrical wall (11).

5. The mechanical system according to any of claims 3 and 4, **characterized in that** the assembling means comprise tabs (151, 152) projecting from a first edge (15) and recesses (161, 162) located on the second edge (16), having a hollow shape complementary to the shape of the tabs.

6. The mechanical system according to one of claims 1 or 2, **characterized in that** the edges (1015, 1016) are welded together.

7. The mechanical system according to one of the previous claims, **characterized in that** the cylindrical wall (11) includes two bores (111, 112) supporting the pin (30).

8. The mechanical system according to any of the preceding claims, **characterized in that** it includes an insert (20; 1020) located inside the support element (10; 1010) and configured for receiving a shaft or a plunger for moving the mechanical system.

9. The mechanical system according to claim 8, **characterized in that** the insert (20) is a disc having radial protrusions (21, 22, 23) housed inside cut-outs (12, 13, 14) made in the cylindrical wall (11).

10. The mechanical system according to claim 8, **characterized in that** the insert (1020) has two holding portions (1020A, 1020B) supporting the pin (30).

11. The mechanical system according to claim 10, **characterized in that** the insert (1020) is assembled to the support element (1010) by means of punched deformations (1012, 1013, 1014) protruding inside the support element (1010).

12. An injection pump for a motor vehicle, comprising a mechanical system (1; 1001) according to one of the claims 1 to 11.

13. A valve actuator for a motor vehicle, comprising a mechanical system (1; 1001) according to one of the claims 1 to 11.

14. A method for manufacturing a mechanical system (1; 1001) according to one of claims 1 to 11, wherein:
- a) a flat metal sheet (10a) is cut to make the contours of the support element (10; 1010),
- b) the sheet (10a) is rolled to obtain the cylindrical shape of the cylindrical wall (11; 1011),
- c) the edges (15, 16; 1015, 1016) are joined together,
- d) the roller (40) is mounted on the support element (10; 1010).

15. The method according to claim 14, **characterized in that** the edges (15, 16; 1015, 1016) are joined by clamping or by welding.
